Europäisches Patentamt

European Patent Office

Office européen des brevets

(19)

(11) **EP 0 945 996 B1**

(12) **FASCICULE DE BREVET EUROPEEN**

(45) Date de publication et mention
de la délivrance du brevet:
**18.05.2005   Bulletin 2005/20**

(51) Int Cl.7: **H04B 1/707**, H04J 13/02

(21) Numéro de dépôt: **99400700.3**

(22) Date de dépôt: **22.03.1999**

(54) **Récepteur AMRC à suppression parallèle d'interférences et à pondération**

CDMA-Empfänger mit paralleler Interferenzunterdrückung und -gewichtung

CDMA receiver with parallel interference suppression and weighting

(84) Etats contractants désignés:
**CH DE GB IT LI**

(30) Priorité:  **24.03.1998  FR 9803586**

(43) Date de publication de la demande:
**29.09.1999   Bulletin 1999/39**

(73) Titulaire: **COMMISSARIAT A L'ENERGIE
ATOMIQUE
75015 Paris Cédex 15 (FR)**

(72) Inventeurs:
• **Boulanger, Christophe
94200 Ivry Sur Seine (FR)**
• **Ouvry, Laurent
38100 Grenoble (FR)**

(74) Mandataire: **Poulin, Gérard et al
Société BREVATOME
3, rue du Docteur Lancereaux
75008 Paris (FR)**

(56) Documents cités:
**WO-A-97/39546**

**Description**

**Domaine technique**

La présente invention a pour objet un récepteur AMRC, c'est-à-dire à accès multiple à répartition par les codes (en anglais : CDMA pour "Code Division Multiple Access"). Elle trouve une application en télécommunications et notamment dans les systèmes radiomobiles.

**Etat de la technique antérieure**

Les avantages des communications AMRC ne sont plus à démontrer. On sait que cette technique consiste à étaler un signal par une séquence pseudo-aléatoire, à attribuer à chaque utilisateur une séquence propre, les séquences attribuées étant orthogonales les unes aux autres, à émettre l'ensemble des signaux ainsi étalés, puis, à la réception, à désétaler le signal reçu à l'aide des séquences utilisées à l'émission et à reconstituer enfin les signaux propres à chaque utilisateur.

Si les différentes séquences d'étalement étaient rigoureusement orthogonales les unes aux autres et si les conditions de propagation étaient parfaites, on reconstituerait sans erreur les signaux propres à chaque utilisateur. Mais, dans la réalité, les choses sont moins simples et chaque utilisateur interfère plus ou moins avec les autres.

Pour réduire ces effets, dits d'interférence d'accès multiple, il a fallu imaginer des moyens de correction disposés dans le récepteur.

A titre d'exemple, on peut décrire le récepteur objet du brevet des Etats-Unis d'Amérique n°5 553 062. La figure 1 annexée reproduit sensiblement la figure 1 du document cité. Le circuit représenté permet de délivrer un signal estimé noté $d_1$, propre à un premier utilisateur. Pour cela, il utilise un circuit d'entrée 41, recevant un signal $R(t)$ des multiplieurs 51, 61, ..., 71 reliés à des générateurs de séquences pseudo-aléatoires 52, 62, ..., 72, qui reproduisent les séquences utilisées à l'émission par les divers utilisateurs, des lignes à retard 53, 63, ..., 73, des amplificateurs 54, 64, ..., 74, et des multiplieurs 55, 65, ..., 75. Si l'on suppose qu'il y a $K$ utilisateurs, on trouve $K$ voies de ce type disposées en parallèle. Les $K-1$ dernières voies permettent d'extraire $K-1$ signaux propres à $K-1$ voies, puis de réétaler ces $K-1$ signaux par les séquences pseudo-aléatoires correspondantes. On peut alors soustraire du signal général d'entrée $R(t)$ l'ensemble de ces $K-1$ signaux réétalés. Pour cela, une ligne à retard 48 est prévue pour décaler le signal d'entrée $R(t)$ de la durée de formation des $K-1$ signaux réétalés, les $K-1$ signaux réétalés et le signal d'entrée retardé étant ensuite appliqués à un soustracteur 150. Celui-ci délivre un signal global débarrassé des signaux propres aux $K-1$ utilisateurs autres que le premier. On peut alors corréler ce signal avec la séquence pseudo-aléatoire propre au premier utilisateur dans un multiplieur 147, lequel reçoit la séquence pseudo-aléatoire délivrée par le générateur 52, séquence convenablement retardée par une ligne à retard 53. Un amplificateur 146 délivre alors la donnée estimée $d_1$ propre au premier utilisateur.

Cette structure peut être répétée $K$ fois pour traiter les $K$ signaux propres aux $K$ utilisateurs. On obtient ainsi $K$ premières estimations des données $d_1, d_2, ..., d_K$.

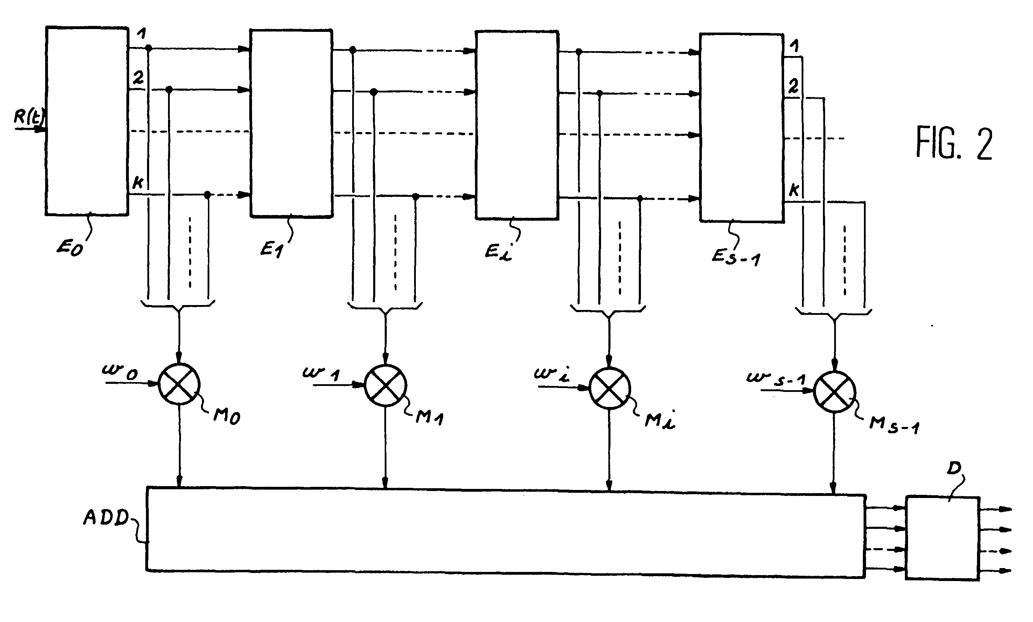

Ce procédé peut être renouvelé dans un deuxième étage de suppression d'interférences et ainsi de suite. La figure 2 annexée montre ainsi, schématiquement, $s$ étages, le premier $E_0$ étant, strictement parlant, un étage classique de corrélation, les autres $E_1, ..., E_i, ..., E_{s-1}$ étant les étages de suppression d'interférences.

On peut encore améliorer les performances d'un tel récepteur en utilisant, non pas la dernière estimation obtenue, mais une moyenne pondérée des différentes estimations obtenues. Cela revient à attribuer un poids $w_i$ à l'estimation $d_i$ et à former la somme des signaux $w_i d_i$. Sur la figure 2, on voit que tous les signaux délivrés par l'étage $E_0$ sont multipliés par un coefficient $w_0$ dans un multiplieur $M_0$, tous les signaux délivrés par l'étage $E_1$ sont multipliés par un coefficient $w_1$ dans un multiplieur $M_1$, tous les signaux délivrés par l'étage $E_i$ par un coefficient $w_i$ dans un multiplieur $M_i$, et tous les signaux délivrés par le dernier étage $E_{s-1}$ par un coefficient $w_{s-1}$ dans un multiplieur $M_{s-1}$. Un additionneur $ADD$ forme ensuite la somme des signaux délivrés par les multiplieurs.

La figure 2 permet également de préciser quelques notations propres à cette technique. A la sortie d'un étage, on trouve $K$ signaux correspondant aux $K$ utilisateurs. Plutôt que de repérer individuellement ces signaux, on peut considérer, de manière plus synthétique, qu'ils sont les $K$ composantes d'un "vecteur". A la sortie de l'étage $E_i$, on trouvera ainsi $K$ signaux qui sont les $K$ composantes d'un vecteur noté $\vec{Z}_i$. A la sortie des multiplieurs $M_0, M_1, ..., M_i, ..., M_{s-1}$, on trouvera ainsi, avec cette notation synthétique, des vecteurs $w_0\vec{Z}_0, ..., w_1\vec{Z}_1, w_i\vec{Z}_i, ..., w_{s-1}\vec{Z}_{s-1}$. La sortie de l'additionneur sera ainsi notée $\vec{Z}$ et l'on pourra écrire :

$$\bar{Z} = \sum_{i=0}^{s-1} w_i \bar{Z}_i \qquad (1)$$

La question demeure de déterminer les coefficients de pondération $w_i$. Dans le document US-A-5 553 062, déjà cité, on propose une loi empirique du type $w_i = 1/2^i$ (col. 12, ligne 30), sans justification. Cela revient à pondérer les sorties des étages de manière décroissante.

Par ailleurs, l'article de S. MOSHAVI et al., intitulé "Multistage Linear Receivers for DS-CDMA Systems" publié dans la revue "International Journal of Wireless Information Networks", vol. 3, n°1, 1996, pp. 1-17, reprend certaines dispositions du brevet US-A-5 553 062 déjà cité et développe la théorie de ce type de récepteur. Il propose également une optimisation des coefficients de pondération.

Sans entrer dans le détail de cette théorie, qui est complexe et sortirait du cadre de la présente invention, on peut la résumer de la manière suivante.

Si chaque utilisateur ne transmettait qu'un seul signal binaire (ou bit), on trouverait, dans le récepteur, des signaux comprenant, pour chaque utilisateur, le bit qui lui est propre, auquel s'ajouteraient des signaux parasites d'interférences dues à la présence des autres utilisateurs. A la sortie de chaque étage, on trouverait ainsi un ensemble de $K$ bits pouvant être considérés comme les $K$ composantes d'un vecteur. A la sortie de l'étage suivant, on trouverait encore $K$ signaux et l'on pourrait caractériser la fonction de transfert de l'étage par une matrice de $K$ lignes par $K$ colonnes, les éléments diagonaux de cette matrice étaient des coefficients d'autocorrélation et les autres éléments, des coefficients d'intercorrélation entre différents utilisateurs.

En pratique, cependant, le signal transmis ne comporte pas un seul bit mais $N$ bits, de sorte que les grandeurs en question ne sont plus de dimension $K$ mais de dimension $NK$. La matrice de transfert se trouve être alors une matrice de $NK$ lignes et $NK$ colonnes.

Si l'on note $\vec{d}$ le vecteur de données (qui possède $NK$ composantes), le vecteur en sortie du premier étage de décorrélation (ou de filtrage adapté) noté $\vec{y}_{mf}$ (l'indice $mf$ rappelant la fonction de filtrage adapté ou "matched filter") peut s'écrire, en négligeant le bruit,

$$\vec{y}_{mf} = R\vec{d}$$

où $R$ est une matrice de corrélation de $NK$ par $NK$. La matrice $R$ peut se décomposer en sous-matrices de $K$ par $K$, lesquelles sont toutes identiques si les utilisateurs emploient le même code d'étalement pour tous les bits du message global. Mais, en toute généralité, ce n'est pas nécessairement le cas.

De façon précise, pour un bit de rang $i$, le coefficient de la $j^{ème}$ ligne et de la $k^{ème}$ colonne de la matrice de corrélation est de la forme :

$$\rho_{j,k}(i) = \int_{\tau_j}^{T_b+\tau_j} a_j(t - \tau_j)a_k(t - \tau_k - iT_b)dt$$

où $a_j$ et $a_k$ sont les valeurs (+1 ou -1) des impulsions (ou "chip") des séquences pseudo-aléatoires, $T_b$ est la durée d'un bit, $\tau_j$ et $\tau_j$ sont des retards.

Chaque étage de suppression d'interférence reproduit la transformation opérée par la matrice $R$, de sorte qu'à la sortie de l'étage $E_1$ on trouve un signal $R\vec{y}_{mf}$, et à la sortie du $i^{ème}$ étage un signal $R^i\vec{y}_{mj}$.

Si l'on traite la somme pondérée des signaux délivrés par tous les étages du récepteur, on obtient une estimation $\hat{d}$ des données sous la forme :

$$\hat{d} = \sum_{i=0}^{s-1} w_i R^i \vec{y}_{mf} \qquad (2)$$

où $s$ est le nombre total d'étages un de filtrage classique et $s-1$ de suppression d'interférences).

Il existe des circuits détecteurs particuliers qui, en théorie, minimisent les erreurs commises dans la transmission et que l'on appelle "détecteur à erreur quadratique minimum" ("Minimum Mean Square Error Detectors" en anglais) ou détecteurs MMSE en abrégé. Or, pour ces détecteurs, la matrice de passage entre l'entrée et la sortie est :

$$[R + N_0 I]^{-1}$$

où $I$ est une matrice unité de même rang que $R$, et $N_0$ la densité spectrale de puissance de bruit. Si l'on veut réaliser un récepteur offrant des performances proches du récepteur idéal, il faut choisir les coefficients de pondération $w_i$ de telle manière que la somme pondérée soit aussi proche que possible de l'inverse de la matrice $[R+N_0I]$ :

$$\sum_{i=0}^{s-1} w_i R^i \cong \left[ R + N_0 I \right]^{-1} \qquad (3)$$

La somme pondérée est précisément la quantité formée par le circuit de la figure 2.

Cette relation entre matrices peut être transposée en plusieurs relations utilisant les valeurs propres des matrices en cause. On sait que, moyennant certaines conditions, qui sont en général remplies dans le domaine en question, on peut transformer une matrice en une matrice où les seuls éléments non nuls sont ceux de la diagonale, éléments qui sont les valeurs propres de la matrice. Chacune des matrices de la reation (3) étant de rang $NK$, il existe en général $NK$ valeurs propres, que l'on peut noter $\lambda_j$. Chaque matrice de la relation (3) ayant été ainsi diagonalisée, on obtient $NK$ relations pour les $NK$ valeurs propres. On cherchera donc, pour chaque valeur propre, à réaliser l'approximation :

$$\sum_{i=0}^{s-1} w_i \lambda_j^i \cong 1 / ( \lambda_j + N_0 ) \qquad (4)$$

On est donc en présence d'un développement polynomial en $\lambda_j$ de degré $s$-$1$. Pour chaque $\lambda_j$, on obtient une équation en $\lambda_j$ où les inconnues sont les $w_i$. Si le nombre s d'étages était égal au nombre $NK$ des valeurs propres, on aurait ainsi $NK$ équations avec $NK$ inconnues $w_i$ que l'on pourrait résoudre. Mais, dans la pratique, le nombre d'étages s est très inférieur au nombre $NK$, de sorte que le nombre d'inconnues est très inférieur au nombre d'équations. On ne peut donc pas satisfaire toutes ces équations simultanément et l'on doit se contenter d'une approximation.

L'article de S. MOSHAVI et al. déjà cité propose un critère particulier de choix fondé sur les considérations suivantes. L'erreur commise entre la somme pondérée et l'inverse de $\lambda_j$+$N_0$ étant notée $e_j$, l'article propose de considérer non pas cette erreur mais son carré pondéré par une fonction qui dépend de la valeur propre $\lambda_j$ et du bruit $N_0$ et de minimiser la somme de ces erreurs pondérées pour toutes les valeurs propres. Autrement dit, il est suggéré de minimiser la quantité :

$$\sum_{j=0}^{NK-1} h(\lambda_j, N_0) e_j^2 \qquad (5)$$

où $h(\lambda_j, N_0)$ est la fonction de pondération avec :

$$e_j = \sum_{i=0}^{s-1} w_i \lambda_j^i - 1 / ( \lambda_j + N_0 ) \qquad (6)$$

Pour diverses raisons exposées dans l'article cité, les auteurs choisissent comme fonction de pondération une fonction quadratique $\lambda_j^2 + N_0\lambda_1$, ce qui revient à privilégier les grandes valeurs propres.

Le document WO 9 739 546 propose également une optimisation des coefficients de pondération où une fonction polynomiale est choisie.

La présente invention a pour but de perfectionner cette technique, par un choix différent de la fonction de pondération, le but visé étant de réduire encore l'erreur commise sur la transmission des données.

## Exposé de l'invention

A cette fin, l'invention préconise d'utiliser, comme fonction de pondération, la distribution des valeurs propres, que l'on notera $p(\lambda)$, et qui est la fonction donnant le nombre de valeurs propres contenues dans un intervalle donné.

Avec les notations précédentes, cela revient à minimiser la quantité :

$$\sum_{j=0}^{NK-1} p(\lambda) \left[ \sum_{i=0}^{s-1} w_i \lambda_j^i - \frac{1}{\lambda_j + N_0} \right]^2 \qquad\qquad (7)$$

De manière précise, la présente invention a pour objet un récepteur pour transmission à accès multiple à répartition par les codes (AMRC), cette transmission étant accessible à une pluralité de $K$ utilisateurs transmettant chacun un message constitué d'une pluralité de $N$ données binaires, chaque donnée propre à un utilisateur étant transmise après étalement de spectre par une séquence pseudo-aléatoire binaire propre à cet utilisateur, ce récepteur comprenant s étages en série, dont :

- un premier étage de réception d'un signal global correspondant à l'ensemble des signaux transmis par les $K$ utilisateurs, ce premier étage comprenant $K$ voies en parallèle, chaque voie étant affectée à une séquence pseudoaléatoire particulière et étant apte à délivrer une première estimation des données reçues correspondant à l'utilisateur ayant utilisé cette séquence pseudoaléatoire, ce premier étage délivrant ainsi $K$ signaux sur $K$ sorties,
- ($s-1$) étages de suppression d'interférences d'accès multiple, chacun de ces étages possédant $K$ entrées et $K$ sorties, les $K$ entrées du premier étage de suppression d'interférences étant reliées aux $K$ sorties du premier étage de réception, et les $K$ entrées des autres étages de suppression d'interférences étant reliées aux $K$ sorties de l'étage de suppression d'interférences qui précède,
- des moyens de pondération de chaque groupe de $K$ signaux délivré par les $K$ sorties de chacun des $s$ étages, les signaux de sortie d'un étage de rang $i$ ($i$ étant compris entre 0 et $s-1$) étant pondérés par un coefficient $\beta_i$, les coefficients $\beta_i$ étant choisis pour qu'une certaine quantité soit minimale,
- un additionneur à s groupes de $K$ entrées pour recevoir les $s$ groupes de $K$ signaux pondérés,
- un moyen de décision relié à l'additionneur et recevant, pour chaque utilisateur, une somme pondérée de signaux et délivrant la donnée correspondante finalement transmise,

ce récepteur étant caractérisé par le choix des coefficients de pondération $\beta_i$ de la manière suivante :

- $A$ étant une matrice de $NK$ lignes et $NK$ colonnes dont les éléments de la diagonale principale sont nuls et les éléments hors diagonale reflètent les intercorrélations entre les signaux transmis par les $K$ utilisateurs pour les $N$ différentes données binaires des messages transmis, cette matrice $A$ possède $NK$ valeurs propres $\lambda_j$ réparties selon une certaine distribution $p(\lambda)$,
- le développement polynomial $\alpha_0\lambda_j^0 + \alpha_1\lambda_j^1 + ... + \alpha_i\lambda_j^i + ... + \alpha_{s-1}\lambda_j^{s-1}$, où les $\alpha_i$ sont des coefficients, présentant avec la quantité $1/(1+\lambda_j)$, un écart noté $e(\lambda_j)$ pour chaque valeur propre $\lambda_j$,
- la quantité que l'on rend minimale est la somme, pour toutes valeurs propres $\lambda_j$, du carré de cet écart, pondéré par la distribution des valeurs propres, soit

$$\sum_{j=0}^{NK-1} p(\lambda) \left[ e(\lambda_j) \right]^2 ,$$

avec en outre la condition $\Sigma p(\lambda_j)e(\lambda_j)=0$, cette double contrainte définissant les coefficients $\alpha_i$,
- les coefficients de pondération $\beta_i$ affectant chaque étage du récepteur se déduisent des coefficients $\alpha_i$ par les relations : $\beta_i =(-1)^i(\alpha_i+\alpha_{i+j})$ pour des valeurs de $i$ allant de 0 à s-2 et $\beta_i=(-1)^i\alpha_i$ pour $i=s-1$.

De préférence, on prend, pour distribution $p(\lambda)$ des valeurs propres de la matrice $A$ une expression approchée égale à $\gamma^2(\lambda+1-a)exp[-\gamma(\lambda+1-a)]$ où $\gamma$ et $a$ sont des constantes appropriées.

**Brève description des dessins**

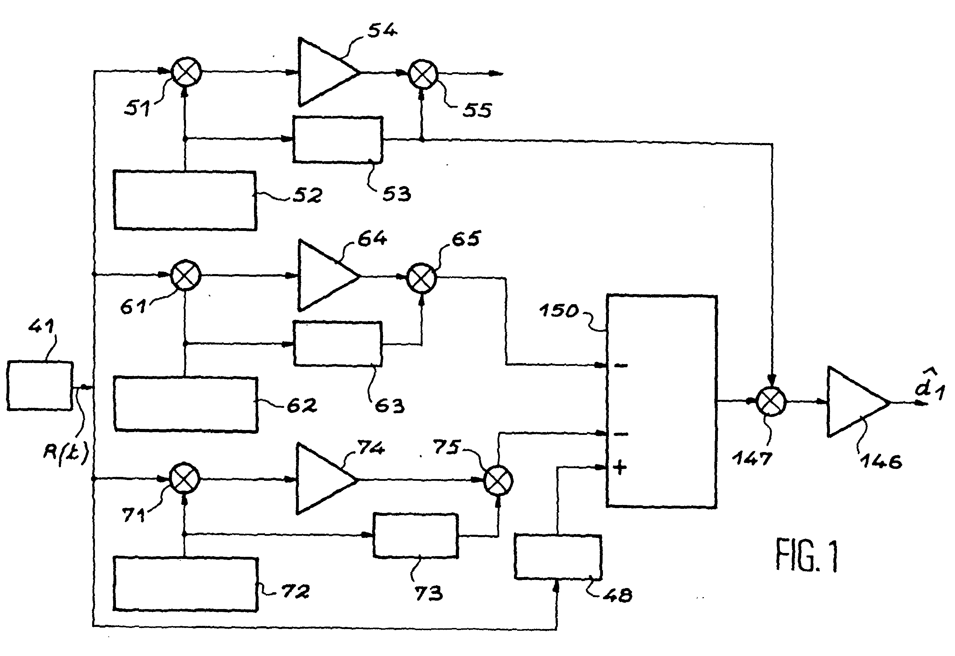

- la figure 1, déjà décrite, montre une partie d'un récepteur connu ;
- la figure 2, déjà décrite, illustre l'utilisation d'une pondération des sorties des différents étages ;
- la figure 3 montre quelques exemples de distribution des valeurs propres d'une matrice ;

- la figure 4 illustre les performances théoriques d'un récepteur conforme à l'invention, comparées aux performances de récepteurs connus ;
- la figure 5 permet une comparaison entre différents récepteurs, dans certaines conditions d'utilisation ;
- la figure 6 permet une autre comparaison entre différents récepteurs ;
- la figure 7 montre schématiquement la structure générale d'un récepteur selon l'invention dans le cas particulier de cinq utilisateurs et trois étages ;
- la figure 8 montre un ordinogramme illustrant un algorithme général ;
- la figure 9 montre un ordinogramme appliqué au cas particulier du circuit de la figure 7.

**Description détaillée de modes particuliers de réalisation**

La matrice $R$, utilisée dans les considérations qui précédent, peut être avantageusement remplacée par une matrice $A$, obtenue en retranchant de $R$ la matrice unité $I$ dont les seuls éléments sont les termes diagonaux égaux à 1 :

$$A=R-I \qquad ou \qquad R=A+I$$

En effet, dans la matrice $R$, on trouve non seulement des coefficients reflétant les interférences entre utilisateurs différents pour des bits de même rang ou de rangs différents (coefficients hors diagonale) mais aussi les coefficients de corrélation pour un même utilisateur (coefficients de la diagonale) et ces coefficients sont tous égaux à 1. La suppression des interférences est donc davantage liée à une matrice $A$, dont tous les éléments diagonaux sont nuls, car elle ne contient plus que des termes traduisant des intercorrélations. Cette matrice est la matrice $A$.

Les matrices $R$ et $A$ ont des traces différentes, sachant que la trace d'une matrice est égale à la somme des termes de sa diagonale. Pour la matrice $R$, la trace est égale à $NK$, alors qu'elle est nulle pour la matrice $A$. Or, on sait que la moyenne des valeurs propres d'une matrice est égale à sa trace divisée par son rang, de sorte que la moyenne des valeurs propres de la matrice $R$ est égale à $NK/NK$ soit 1, alors que la moyenne des valeurs propres de la matrice $A$ est nulle. La distribution $p(\lambda)$ des valeurs propres de la matrice $A$ est donc centrée sur zéro.

Si l'on désigne par $\vec{y}$ les signaux appliqués aux $K$ entrées d'un étage de suppression d'interférences, on trouve, à la sortie du circuit de suppression caractérisé par la matrice $A$, un signal $Ay$, que l'on retranche du signal incident, soit $Iy$, de sorte que la sortie de ce premier étage est de la forme $I\vec{y}-A\vec{y}$ soit $(I-A)\vec{y}$.

Le deuxième étage traite à nouveau le signal $(I-A)\vec{y}$ par la matrice $A$, ce qui donne $(I-A)A\vec{y}$, que l'on retranche à nouveau de $I\vec{y}$ pour obtenir $(I-A+A^2)\vec{y}$ et ainsi de suite. A la sortie du i$^{\text{ème}}$ étage, on trouve donc des signaux $\vec{Z}_i$ de la forme :

$$\vec{Z}_i = \sum_{j=0}^{i} (-A)^j \vec{y} \qquad\qquad (8)$$

où l'indice $i$ court de 0 à $s-1$.

Si l'on combine linéairement les sorties de ces étages par des coefficients que l'on notera $\beta_i$ (avec $i=0, 1, ..., s-1$) (pour se distinguer des coefficients $w_i$ de l'art antérieur), on obtiendra un signal $\vec{Z}$ de la forme :

$$\vec{Z} = \sum_{i=0}^{s-1} \beta_i \vec{Z}_i \qquad\qquad (9)$$

soit, en remplaçant les $Z_i$ par leur valeur tirée de (8) :

$$\vec{Z} = \sum_{i=0}^{s-1} \beta_i \left( \sum_{j=0}^{i} (-A)^j \right) \vec{Z}_0 \qquad\qquad (10)$$

L'expression (10) est une combinaison linaire de $A^j$ avec des coefficients que l'on note $\alpha_j$ :

$$\bar{Z} = \left(\sum_{i=0}^{s-1} \alpha_i A^i\right)\bar{Z}_0 \qquad (11)$$

Pour rapprocher au mieux un détecteur idéal à décorrélation, dont la fonction de transfert serait $R^{-1}$, c'est-à-dire $(I+A)^{-1}$, on recherchera à donner au développement polynomial (11) une valeur aussi proche que possible de $(I+A)^{-1}$ soit :

$$\sum_{i=0}^{s-1} \alpha_i A^i \cong (I + A)^{-1} \qquad (12)$$

ce qui peut se traduire, en termes de valeurs propres $\lambda_j$, par l'approximation :

$$\sum_{i=0}^{s-1} \alpha_i \lambda_j^i \cong 1/(1+\lambda_j) \qquad (13)$$

pour toutes les *NK* valeurs de *j*, soit *j=0, 1, 2,..., (NK-1).*

A partir des coefficients $\alpha_1$ choisis, on peut remonter aux coefficients $\beta_i$ en établissant les relations liant ces deux types de coefficients. Pour trouver ces relations, il suffit de développer les quantités

$$\sum_i \beta_i \sum_j (-A)^j$$

et

$$\sum_i \alpha_i A^i$$

et d'égaler les coefficients d'une même puissance de $A^i$. On trouve alors, pour tous les *i* allant de *i=0 à i=s-2* :

$$\beta_i = (-1)^1 (\alpha_i + \alpha_{i+1}) \qquad (14)$$

et pour le dernier *i=s-1* :

$$\beta_{s-1} = (-1)^{s-1} \alpha_{s-1} \qquad (15)$$

Selon l'invention, les coefficients $\alpha_i$ sont soumis à une double contrainte, qui est, en notant $e(\lambda)$ l'écart entre $1/(1+\lambda)$ et

$$\sum_{i=0}^{s-1} \alpha_i \lambda^i \quad :$$

$$\sum_{j} p(\lambda_{j})e(\lambda_{j}) = 0 \qquad\qquad (16)$$

$$\sum_{j} p(\lambda_{j})\left[e(\lambda_{j})\right]^{2} \ \text{minimal.} \qquad \cdot \qquad (17)$$

où $p(\lambda)$ est la distribution des valeurs propres. Comme le nombre des valeurs propres est très grand, on peut considérer que $\lambda$ est une variable continue et que les sommations discrètes sont des intégrales. Les contraintes deviennent :

$$\int_{R} p(\lambda)e(\lambda)d\lambda = 0 \qquad\qquad (18)$$

$$\int_{R} p(\lambda)[e(\lambda)]^{2}d\lambda \ \text{minimale} \qquad\qquad (19)$$

où R est le domaine de distribution des valeurs propres. La première expression (18) exprime la nullité de la moyenne de l'erreur commise, et la seconde (19) le minimum de la variance de l'erreur.

Pour des communications de type synchrone (les $\tau_1$ sont égaux), la variance des valeurs propres, c'est-à-dire la moyenne de la somme du carré de l'écart des valeurs propres par rapport à la moyenne de ces valeurs propres est donnée en théorie, par :

$$\sigma_{\lambda}^{2} = \frac{K - 1}{M} \qquad\qquad (20)$$

où $K$ est le nombre d'utilisateurs et $M$ le facteur de gain ("Processing Gain" en anglais), c'est-à-dire le rapport entre la durée d'un bit transmis et la durée des chips des séquences pseudoaléatoires (cf. l'article de S. MOSHAVI déjà cité, équation 58). En pratique, $\sigma_{\lambda}^{2}$ est déterminé par des procédés de simulation.

Pour des communications asynchrones (les $\tau_1$ sont différents), cette variance est estimée par des procédés de simulation.

Pour exprimer quantitativement la distribution $p(\lambda)$ des valeurs propres, on utilisera de préférence une approximation indiquée dans l'ouvrage de A. PAPOULI intitulé "Probability, Random Variables, and Stochastic Processes", McGraw Hill, Second Edition, 1985. Cet ouvrage donne pour une telle distribution l'approximation suivante :

$$p(\lambda) = \gamma^{2}(\lambda + 1 - a)exp[-\gamma(\lambda + 1 - a] \qquad\qquad (21)$$

pour $\lambda \geq \alpha - 1$, avec :

$$\gamma = 1,6785/\sigma_{\lambda}$$

$$a = 1 - 1,3685/\gamma$$

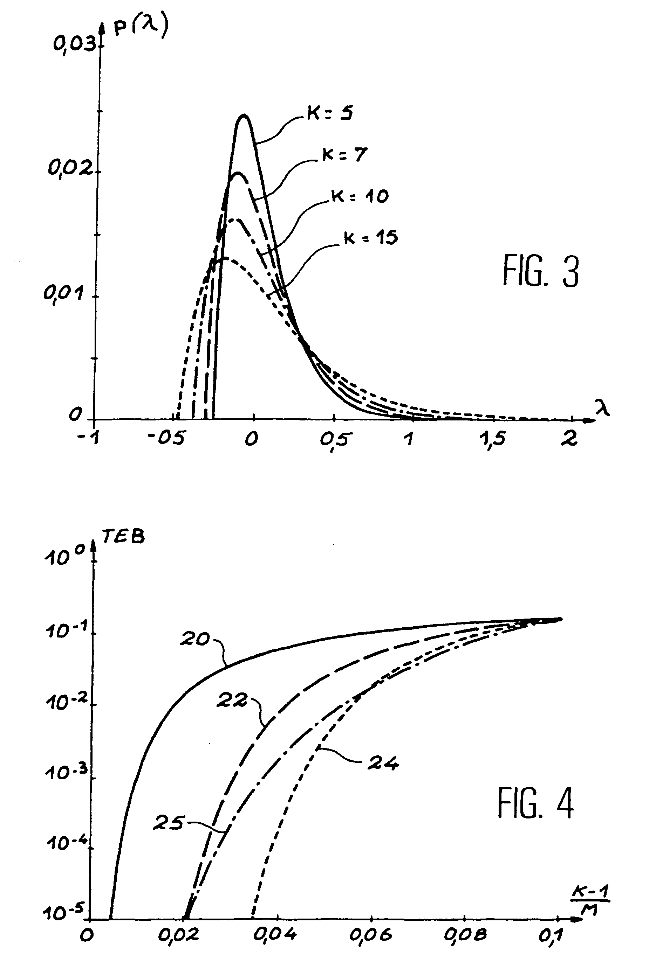

Pour illustrer cette question de la distribution des valeurs propres, la figure 3 montre quelques distributions obtenues dans le cas de séquences pseudoaléatoires de 63 chips pour un nombre d'utilisateurs $K$ variable ($K$=5, 7, 10, 15) et des transmissions synchrones. On vérifie, au passage, que les valeurs propres se répartissent bien autour de 0, puisque leur moyenne est nulle.

Selon l'invention, on assure l'égalité (16) et on minimise la quantité (17).

En utilisant l'approximation en question, valable pour $\lambda > a-1$ et en sortant le coefficient $\gamma^2$ et, dans l'exponentielle, le facteur $exp(-\gamma+\gamma a)$ qui ne dépend pas de $\lambda$, et en prenant une forme intégrale et non une somme discrète, on assure l'égalité :

$$\int_{a-1}^{\infty} (\lambda + 1 - a) \, exp(-\gamma\lambda)e(\lambda)d\lambda = 0 \qquad\qquad (22)$$

et on minimise la quantité :

$$\int_{a-1}^{\infty} (\lambda + 1 - a) \, exp(-\gamma\lambda)e^2(\lambda)d\lambda \qquad\qquad (23)$$

L'équation 22 fournit :

$$\frac{exp(-\gamma(a-1))}{\gamma} a\xi - \sum_{k=1}^{s-1} \alpha_k \big[ v(k+1) + (1-a)v(k) \big] = 0$$

où :

$$\xi = \int_{a-1}^{+\infty} \frac{exp(-\gamma\lambda)}{\lambda + 1} d\lambda \ ,$$

qui se calcule numériquement :

$$v(k) = exp(-\gamma(a-1))\sum_{n=0}^{k-1} \frac{k!}{(k-n)!} \frac{(a-1)^{k-n}}{\gamma^{n+1}} + \frac{k!}{\gamma^{k+1}}, \quad \text{pour } k \neq 0$$

$$v(k)\frac{k}{\gamma}v(k-1) + \frac{(a-1)^k}{\gamma}exp(-\gamma(a-1)), \qquad \text{pour } k \geq 1.$$

On obtient finalement une relation du genre :

$$\alpha_0 = f(\alpha_1, \alpha_2, ..., \alpha_{s-1}) \qquad\qquad (24)$$

où $f$ est un polynôme du premier degré en les variables $\alpha_1, \alpha_2, ..., \alpha_{s-1}$.

La quantité à minimiser est un polynôme de degré 2 en les variables $\alpha_0, \alpha_1, \alpha_2, .., \alpha_{s-1}$, qui a pour équation :

$$w(0) - \alpha\phi + \sum_{k=0}^{s-1}\sum_{j=0}^{s-1} \alpha_k \alpha_j v(j+k+1) + (1-\alpha)\sum_{k=0}^{s-1}\sum_{i=0}^{s-1} \alpha_k \alpha_j v(j+k) -$$

$$2\sum_{k=0}^{s-1} \alpha_k v(k) + 2\alpha\sum_{k=0}^{s} \alpha_k w(k)$$

$$(25)$$

où :

$$\phi = \int_{\alpha-1}^{+\infty} \frac{exp(-\gamma x)}{(1+x)^2} dx$$

qui se calcule numériquement :

$$w(k) = \sum_{n=0}^{k-1} (-1)^{n-k+1} v(n), \quad \text{quel que soit } k \neq 0, \qquad (26)$$

et,

$$w(0) = \xi \qquad (27)$$

ou mieux, avec la formule de récurrence suivante :

$$w(k) = v(k-1) - w(k-1), \qquad \text{pour } k \geq 1. \qquad (28)$$

La minimisation recherchée, via l'annulation des dérivées premières de (25) suivant chacune des variables $\alpha_0, \alpha_1, \alpha_2, ..., \alpha_{s-1}$, fournit $s$ équations à $s$ variables :

$$\sum_{j=0}^{s-1} \alpha_j \left[ v(u+j+1) + (1-\alpha)v(u+j) \right] = v(u) - w(u) \qquad (29)$$

pour $u$ compris dans l'intervalle 0, $s$-1.
Dans ces équations, la première (pour $u$=0) est redondante avec (27).
On se retrouve avec s équations à $s$ inconnues $\alpha_0, \alpha_1, \alpha_2, ..., \alpha_{s-1}$ que l'on résout de manière numérique, ce qui donne $s$ coefficients $\alpha_i$.
On obtient alors aisément les coefficients $\beta_i$ recherchés par les relations (14) et (15) déjà indiquées.
A titre d'exemple, on considère un circuit à deux étages ($s$=2) avec un étage de corrélation et un étage de suppression d'interférences et l'on se place dans le cas de cinq utilisateurs ($K$=5) parfaitement synchrones utilisant des séquences pseudoaléatoires de 63 chips chacune. On a alors :

$$\sigma_\lambda^2 \approx 0,06$$

$$\alpha \approx 0,75$$

$$\gamma \approx 6,66$$

$$\xi \approx 0,91$$

$$\phi \approx 1,06$$

On cherche un couple ($\alpha_0, \alpha_1$) de coefficients tels que :

$$\int_{a-l}^{+\infty}\left(\frac{l}{l+x} - \alpha_0 - \alpha_l x\right)(x+l-\alpha)exp(-\gamma x)dx = 0 \qquad (30)$$

et tel que :

$$\int_{a-l}^{+\infty}\left(\frac{l}{l+x} - \alpha_0 - \alpha_l x\right)^2 (x+l-\alpha)exp(-\gamma x)dx \text{ soit minimal}$$

$$(31)$$

L'équation (30) fournit :

$$\alpha_0\left(\frac{l}{\gamma^2}\right) = \left(\frac{l}{\gamma} - \alpha\xi exp(\gamma(\alpha - l))\right) \qquad (32)$$

soit :

$$\alpha_0 \approx 1,02$$

En dérivant l'expression (31) par rapport à $\alpha_1$, on obtient :

$$\alpha_l\left[\frac{\gamma^3(\alpha-l)^3 + 3\gamma^2(\alpha-l)^2 + 6\gamma(\alpha-l)+6}{\gamma^4} + (l-\alpha)\frac{\gamma^2(\alpha-l)^2 + 2(1+\gamma(\alpha-l))}{\gamma^3}\right]$$

$$exp(-\gamma(\alpha-l)) = exp(-\gamma(x-l))\left[\frac{\gamma(\alpha-l)+l}{\gamma^2} - \frac{\alpha}{\gamma}\right] + \alpha\xi$$

$$(33)$$

soit :

$$\alpha_l \approx 0,78$$

ce qui fournit :

$$\begin{cases} \beta_l = -\alpha_l \approx 0,78 \\ \beta_0 = -\beta_l + \alpha_0 \approx 0,24 \end{cases}$$

Cet exemple, qui implique deux coefficients, correspond donc à une approximation linéaire $\alpha_0\lambda^0 + \alpha_1\lambda^1$, c'est-à-dire 1,02-0,78$\lambda$, censée s'approcher au mieux de 1/1+$\lambda$.

Les tableaux suivants correspondent à diverses situations avec un nombre *s* d'étages allant de 1 à 5 et un nombre *K* d'utilisateurs allant de 2 à 10. Ces tableaux donnent directement les coefficients $\beta$ de pondération des sorties de *s* étages (pour *s*=2 et *K*=5, on retrouve l'exemple précédent).

Tableau 1 :

| | s=2 | | | | | | | | |
|---|---|---|---|---|---|---|---|---|---|
| $\beta_i$ | K=2 | K=3 | K=4 | K=5 | K=6 | K=7 | K=8 | K=9 | K=10 |
| $\beta_0$ | 0,14 | 0,19 | 0,22 | 0,24 | 0,25 | 0,27 | 0,28 | 0,30 | 0,30 |
| $\beta_1$ | 0,85 | 0,82 | 0,80 | 0,78 | 0,77 | 0,76 | 0,76 | 0,75 | 0,75 |

Tableau 2 :

| | s=3 | | | | | | | | |
|---|---|---|---|---|---|---|---|---|---|
| $\beta_i$ | K=2 | K=3 | K=4 | K=5 | K=6 | K=7 | K=8 | K=9 | K=10 |
| $\beta_0$ | 0,01 | 0,01 | 0,01 | 0,02 | 0,02 | 0,02 | 0,02 | 0,01 | 0,01 |
| $\beta_1$ | 0,32 | 0,40 | 0,43 | 0,46 | 0,49 | 0,51 | 0,53 | 0,55 | 0,56 |
| $\beta_2$ | 0,66 | 0,60 | 0,55 | 0,52 | 0,50 | 0,48 | 0,47 | 0,46 | 0,45 |

Tableau 3 :

| | s=4 | | | | | | | | |
|---|---|---|---|---|---|---|---|---|---|
| $\beta_i$ | K=2 | K=3 | K=4 | K=5 | K=6 | K=7 | K=8 | K=9 | K=10 |
| $\beta_0$ | 0,00 | 0,00 | -0,01 | -0,02 | -0,02 | -0,03 | -0,04 | -0,04 | -0,05 |
| $\beta_1$ | 0,14 | 0,12 | 0,15 | 0,17 | 0,19 | 0,21 | 0,23 | 0,24 | 0,26 |
| $\beta_2$ | 0,49 | 0,50 | 0,52 | 0,54 | 0,55 | 0,56 | 0,56 | 0,57 | 0,58 |
| $\beta_3$ | 0,37 | 0,39 | 0,34 | 0,30 | 0,28 | 0,26 | 0,25 | 0,23 | 0,22 |

Tableau 4 :

| | s=5 | | | | | | | | |
|---|---|---|---|---|---|---|---|---|---|
| $\beta_i$ | K=2 | K=3 | K=4 | K=5 | K= 6 | K=7 | K=8 | K=9 | K=10 |
| $\beta_0$ | 0,00 | 0,00 | -0,01 | -0,01 | -0,02 | -0,02 | -0,03 | -0,04 | -0,05 |
| $\beta_1$ | 0,36 | 0,02 | 0,03 | 0,04 | 0,04 | 0,05 | 0,05 | 0,06 | 0,06 |
| $\beta_2$ | 1,34 | 0,27 | 0,31 | 0,35 | 0,38 | 0,40 | 0,42 | 0,44 | 0,46 |
| $\beta_3$ | 0,37 | 0,48 | 0,47 | 0,46 | 0,45 | 0,44 | 0,43 | 0,43 | 0,22 |
| $\beta_4$ | -1,08 | 0,22 | 0,18 | 0,16 | 0,14 | 0,13 | 0,11 | 0,10 | 0,10 |

Tableau 5 :

| | s=6 | | | | | | | | |
|---|---|---|---|---|---|---|---|---|---|
| $\beta_i$ | K=2 | K=3 | K=4 | K=5 | K=6 | K=7 | K=8 | K=9 | K=10 |
| $\beta_0$ | -0,09 | 0,00 | 0,00 | 0,00 | -0,01 | -0,01 | -0,02 | -0,02 | -0,03 |
| $\beta_1$ | 1,24 | 0,00 | 0,00 | 0,00 | -0,01 | -0,09 | -0,01 | -0,02 | -0,02 |
| $\beta_2$ | 9,83 | 0,16 | 0,15 | 0,18 | 0,20 | 0,2 | 0,24 | 0,26 | 0,28 |
| $\beta_3$ | 11,78 | 0,4 | 0,41 | 0,43 | 0,45 | 0,53 | 0,47 | 0,48 | 0,48 |
| $\beta_4$ | -8,89 | 0,3 | 0,35 | 0,32 | 0,30 | 0,32 | 0,27 | 0,26 | 0,24 |
| $\beta_5$ | -12,57 | 0,09 | 0,09 | 0,07 | 0,06 | 0,05 | 0,05 | 0,04 | 0,04 |

Les figures 4, 5 et 6 permettent de comparer les performances théoriques d'un récepteur conforme à l'invention avec des récepteurs connus.

Sur la figure 4, tout d'abord, est représenté le taux d'erreurs de bits (en abrégé TEB) en fonction du rapport $(K-1)/M$ où $K$ est le nombre d'utilisateurs et $M$ le facteur de gain. Dans le cas illustré $M$ est égal à 63 (nombre de chips par bit).

**EP 0 945 996 B1**

Le taux d'erreurs de bits augmente avec le nombre d'utilisateurs et diminue lorsque le facteur de gain augmente. La courbe 20 correspond à un récepteur classique sans étage de suppression d'interférences ; la courbe 22 à un récepteur avec un étage de suppression ; la courbe 24 à un récepteur avec deux étages de suppression et la courbe 25 à un récepteur selon l'invention avec un étage de suppression et la pondération linéaire décrite. Les performances sont donc meilleures à nombre d'étages de suppression d'interférences égal (en l'occurrence 1) et aussi bonnes qu'avec deux étages dès que *(K-1)/M* est supérieur à 0,06, c'est-à-dire à partir de cinq utilisateurs.

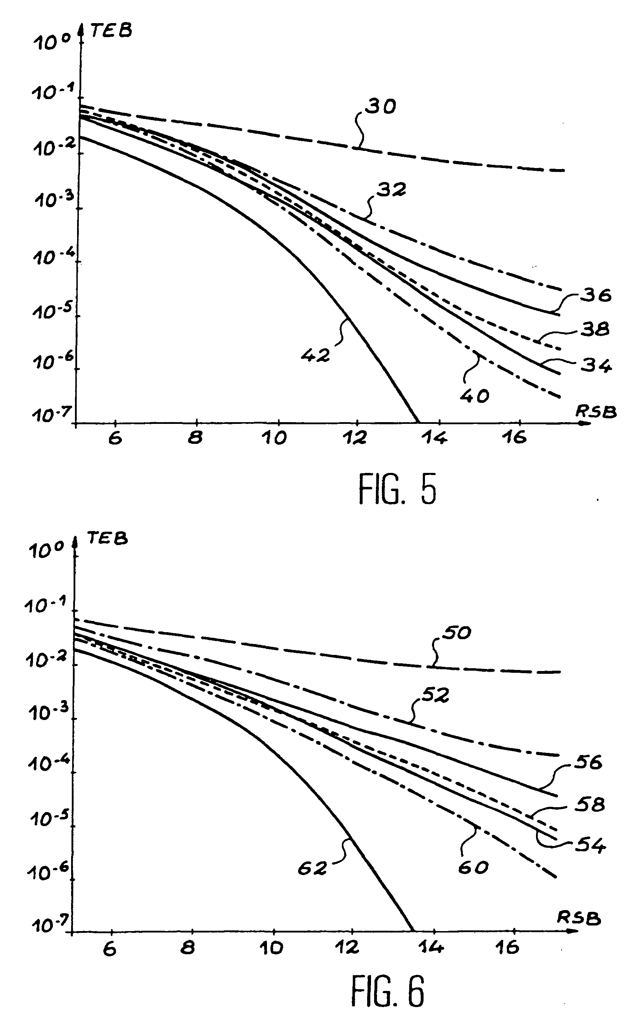

Les figures 5 et 6 sont des simulations représentant le taux d'erreur de bits (TEB) en fonction du rapport signal sur bruit RSB. Le taux d'erreur est d'autant plus faible que le rapport signal sur bruit est grand. Sur la figure 5, la courbe 30 correspond à un récepteur classique sans étage de suppression d'interférences ; la courbe 32 correspond à un récepteur avec un étage de suppression parallèle d'interférences ; la courbe 34 correspond à un récepteur à deux étages de suppression parallèle d'interférences ; la courbe 36 correspond à un récepteur conforme au brevet US-A-5 553 062 (avec des coefficients de pondération en 1/2[1]) ; la courbe 38 correspond à un récepteur conforme à l'article de S. MOSHAVI et al. déjà cité (pondération quadratique) ; la courbe 40 correspond à un récepteur conforme à la présente invention ; enfin, la courbe 42 correspond au cas théorique d'un récepteur à décorrélation parfaite.

Cette simulation correspond à une modulation de type DQPSK ("Differential Quaternary Phase Shift Keying" ou modulation différentielle de phase à quatre états). Elle correspond également au cas où la réponse impulsionnelle est formée d'une seule raie, dans un canal théorique où il n'y aurait qu'un seul trajet. Le bruit est supposé de type gaussien, blanc, centré et additif.

La figure 6 correspond aux mêmes hypothèses (modulation DQPSK et bruit gaussien blanc, centré, additif) mais en supposant qu'en plus du trajet principal, on trouve trois trajets supplémentaires suivant une loi de RAYLEIGH. Les courbes sont repérées comme pour la figure 5 avec un décalage de 20 dans les références : 50 : récepteur classique sans suppression d'interférences ; 52 : récepteur à un étage de suppression d'interférences ; 54 : récepteur à deux étages de suppression d'interférences ; 56 : récepteur selon US-A-5 553 062 ; 58 : récepteur selon S. MOSHAVI et al. ; 60 : récepteur selon l'invention ; 62 : récepteur théorique.

Ces résultats montrent clairement l'amélioration apportée par l'invention, puisque le taux d'erreur de bits y est le plus bas.

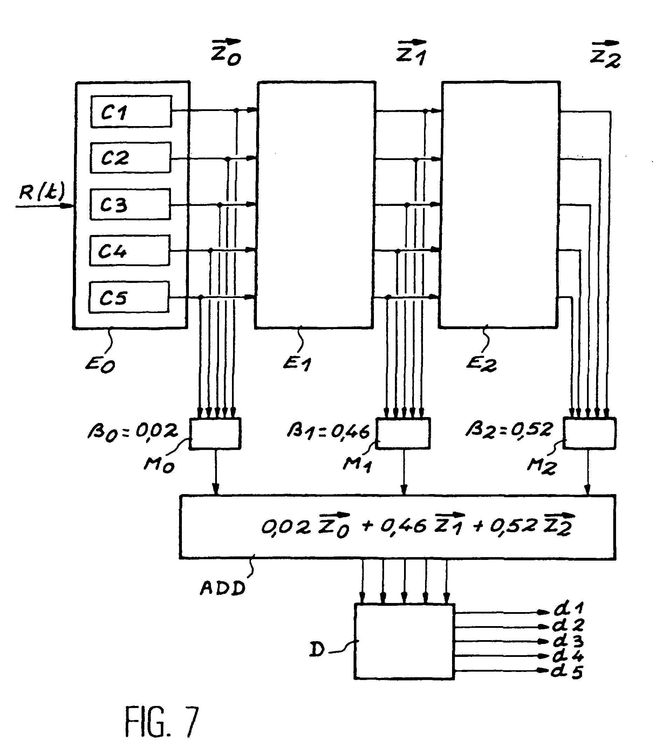

La figure 7 illustre un récepteur selon l'invention dans le cas particulier de cinq utilisateurs et trois étages. On voit, sur cette figure, un premier étage $E_0$, avec cinq voies en parallèles $C_1$, $C_2$, $C_3$, $C_4$, $C_5$ (K=5), chaque voie étant affectée à une séquence pseudoaléatoire particulière et étant apte à délivrer une première estimation $\vec{Z}_0$ des données reçues et deux étages de suppression d'interférences $E_1$, $E_2$ à cinq entrées et cinq sorties, trois moyens de pondération $M_0$, $M_1$, $M_2$ multipliant les sorties $\vec{Z}_0$, $\vec{Z}_1$, $\vec{Z}_2$ par des coefficients $\beta_0$, $\beta_1$, $\beta_2$ égaux respectivement à 0,02 à 0,46 et à 0,52, un additionneur ADD effectuant la somme des sorties des moyens pondérateurs, et un moyen de décision D relié à l'additionneur ADD et délivrant les données d1, d2, d3, d4 et d5.

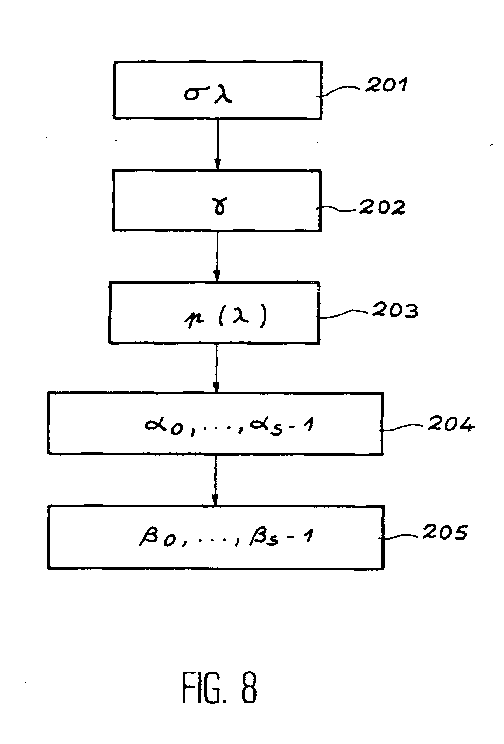

La figure 8 est un ordinogramme illustrant l'algorithme général d'obtention des coefficients β. Il comprend les opérations suivantes :

201 : détermination de $\sigma_\lambda$ par des simulations,
202 : détermination de la valeur de γ via l'expression (17),
203 : détermination de la distribution p(λ),
204 : calcul des coeffients $\alpha_0$, ..., $\alpha_{s-1}$ via (29),
205 : calcul des coefficients $\beta_0$ ..., $\beta_{s-1}$ via (14) et (15).

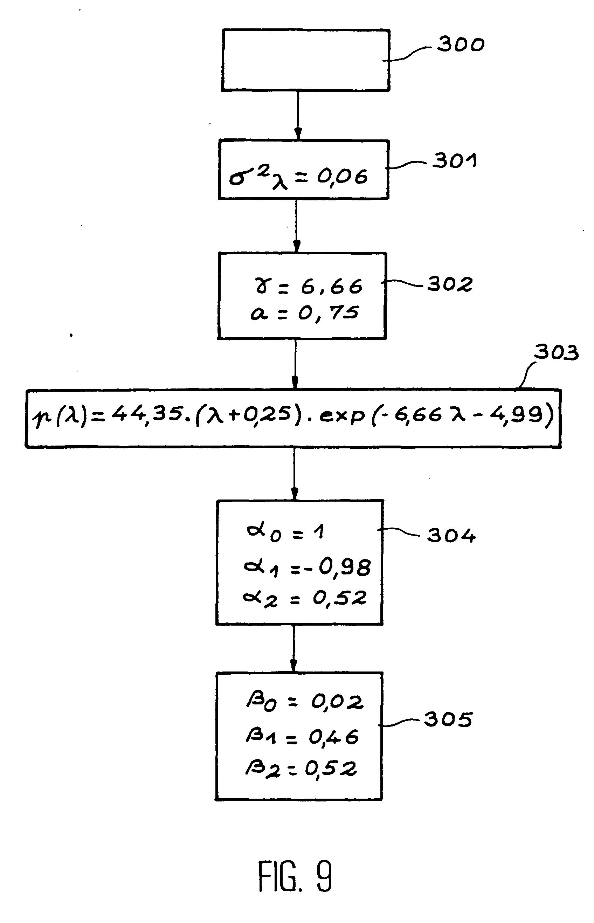

La figure 9 est un ordinogramme illustrant l'algorithme particulier correspondant au cas particulier de la figure 7. Les opérations sont les suivantes :

300 : on spécifie que les communications sont synchrones,

301 : obtention de $\sigma_\lambda^2$=0,06,

302 : obtention de γ=6,66 et a=0,75,

303 : calcul de p(λ) :

$$p(\lambda)=44,35(\lambda+0,25)\exp(-6,66\lambda-4,99)$$

304 : obtention de $\alpha_0$=1
$\alpha_1$=-0,98

$$\alpha_2 = 0,52$$

305 :  obtention de $\beta_0 = 0,02$
$$\beta_1 = 0,46$$
$$\beta_2 = 0,52$$

## Revendications

**1.** Récepteur pour transmission à accès multiple à répartition par les codes (AMRC), cette transmission étant accessible à une pluralité de $K$ utilisateurs transmettant chacun un message constitué d'une pluralité de $N$ données binaires, chaque donnée propre à un utilisateur étant transmise après étalement de spectre par une séquence pseudo-aléatoire binaire propre à cet utilisateur, ce récepteur comprenant s étages en série, dont :

- un premier étage de réception d'un signal global correspondant à l'ensemble des signaux transmis par les $K$ utilisateurs, ce premier étage comprenant $K$ voies en parallèle, chaque voie étant affectée à une séquence pseudoaléatoire particulière et étant apte à délivrer une première estimation des données reçues correspondant à l'utilisateur ayant utilisé cette séquence pseudoaléatoire, ce premier étage délivrant ainsi $K$ signaux sur $K$ sorties,
- ($s-1$) étages de suppression d'interférences d'accès multiple, chacun de ces étages possédant $K$ entrées et $K$ sorties, les $K$ entrées du premier étage de suppression d'interférences étant reliées aux $K$ sorties du premier étage de réception, et les $K$ entrées des autres étages de suppression d'interférences étant reliées aux $K$ sorties de l'étage de suppression d'interférences qui précède,
- des moyens de pondération de chaque groupe de $K$ signaux délivré par les $K$ sorties de chacun des $s$ étages, les signaux de sortie d'un étage de rang $i$ ($i$ étant compris entre 0 et $s-1$) étant pondérés par un coefficient $\beta_i$, les coefficients $\beta_i$ étant choisis pour qu'une certaine quantité soit minimale,
- un additionneur à $s$ groupes de $K$ entrées pour recevoir les $s$ groupes de $K$ signaux pondérés,
- un moyen de décision relié à l'additionneur et recevant, pour chaque utilisateur, une somme pondérée de signaux et délivrant la donnée correspondante finalement transmise,

ce récepteur étant **caractérisé en ce qu'**il comprend des moyens pour choisir les coefficients de pondération $\beta_i$ de la manière suivante :

- $A$ étant une matrice de $NK$ lignes et $NK$ colonnes dont les éléments de la diagonale principale sont nuls et les éléments hors diagonale reflètent les intercorrélations entre les signaux transmis par les $K$ utilisateurs pour les $N$ différentes données binaires des messages transmis, cette matrice $A$ possède $NK$ valeurs propres $\lambda_j$ réparties selon une certaine distribution $p(\lambda)$,
- le développement polynomial $\alpha_0\lambda_j^0 + \alpha_1\lambda_1^1 + ... + \alpha_i\lambda_j^i + .. + \alpha_{s-1}\lambda_1^{i-1}$, où les $\alpha_i$ sont des coefficients, présentant avec la quantité $1/(1+\lambda_j)$, un écart noté $e(\lambda_j)$ pour chaque valeur propre $\lambda_j$, la quantité que l'on rend minimale est la somme, pour toutes valeurs propres $\lambda_j$, du carré de cet écart pondéré par la distribution des valeurs propres, soit

$$\sum_{j=0}^{NK-1} p(\lambda_j)\left[e(\lambda_j)\right]^2 ,$$

avec en outre la condition

$$\sum_{j=0}^{NK-1} p(\lambda_j)e(\lambda_j) = 0 ,$$

cette double contrainte définissant les coefficients $\alpha_i$,
- les coefficients de pondération $\beta_i$ affectant chaque étage du récepteur se déduisant des coefficients $\alpha_i$ par les relations : $\beta_i = (-1)^i(\alpha_i + \alpha_{i+1})$ pour des valeurs de $i$ allant de 0 à $s-2$ et $\beta_i = (-1)^i\alpha_i$ pour $i = s-1$.

**2.** Récepteur selon la revendication 1, dans lequel on prend, pour distribution $p(\lambda)$ des valeurs propres de la matrice $A$ une expression approchée égale à $\gamma^2(\lambda+1-a)exp[-\gamma(\lambda+1-a)]$ où $\gamma$ et $a$ sont des constantes appropriées.

**3.** Récepteur selon la revendication 2 pour communications synchrones, comprenant deux étages ($s$=2) dont un premier étage de réception et un étage de suppression d'interférences, dans lequel :

- le coefficient de pondération $\beta_0$ est compris entre environ 0,14 et environ 0,30,
- le deuxième coefficient de pondération $\beta_1$ est compris entre environ 0,85 et environ 0,75.

**4.** Récepteur selon la revendication 1 pour communications synchrones, comprenant trois étapes ($s$=3) dont un étage de réception suivi de deux étages de suppression d'interférences, dans lequel :

- le premier coefficient de pondération $\beta_0$ est compris entre environ 0,01 et environ 0,02,
- le deuxième coefficient de pondération $\beta_1$ est compris entre environ 0,32 et environ 0,56,
- le troisième coefficient de pondération $\beta_2$ est compris entre environ 0,66 et environ 0,45.

**5.** Récepteur selon la revendication 1 pour communications synchrones, comprenant quatre étages ($s$=4) dont un étage de réception suivi de trois étages de suppression d'interférences, dans lequel :

- le premier coefficient de pondération $\beta_0$ est sensiblement nul,
- le deuxième coefficient de pondération $\beta_1$ est compris entre environ 0,14 et environ 0,26,
- le troisième coefficient de pondération $\beta_2$ est compris entre environ 0,49 et environ 0,58,
- le quatrième coefficient de pondération $\beta_3$ est compris entre environ 0,37 et environ 0,22.

**6.** Récepteur selon la revendication 1 pour communications synchrones, comprenant cinq étages ($s$=5) dont un étage de réception suivi de quatre étages de suppression d'interférences, dans lequel :

- le coefficient de pondération $\beta_0$ est sensiblement nul,
- le coefficient de pondération $\beta_1$ est voisin de 0,36 pour deux utilisateurs ou compris entre environ 0,02 et environ 0,06 pour plus de deux utilisateurs,
- le coefficient de pondération $\beta_2$ est voisin de 1,34 pour deux utilisateurs ou compris entre environ 0,27 et environ 0,46 pour plus de deux utilisateurs,
- le coefficient de pondération $\beta_3$ est voisin de 0,37 pour deux utilisateurs ou compris entre environ 0,48 et environ 0,42 pour plus de deux utilisateurs,
- le coefficient de pondération $\beta_4$ est voisin de -1,08 pour deux utilisateurs ou compris entre environ 0,22 et environ 0,10 pour plus de deux utilisateurs.

**7.** Récepteur selon la revendication 1 pour communications synchrones, comprenant six étages ($s$=6), dont un étage de réception suivi de cinq étages de suppression d'interférences dans lequel :

- le coefficient de pondération $\beta_0$ est sensiblement nul,
- le coefficient de pondération $\beta_1$ est voisin de 1,24 pour deux utilisateurs ou sensiblement nul pour plus de deux utilisateurs,
- le coefficient de pondération $\beta_2$ est voisin de 9,83 pour deux utilisateurs, ou compris entre environ 0,16 et environ 0,28 pour plus de 2 utilisateurs,
- le coefficient de pondération $\beta_3$ est voisin de 11,78 pour deux utilisateurs, et compris entre environ 0,40 et 0,48 pour plus de deux utilisateurs,
- le coefficient de pondération $\beta_4$ est voisin de -8,89 pour deux utilisateurs, ou compris entre environ 0,3 et 0,24 pour plus de deux utilisateurs,
- le coefficient de pondération $\beta_5$ est voisin de -12,57 pour deux utilisateurs, ou compris entre 0,09 et 0,04 pour plus de deux utilisateurs.

**Patentansprüche**

**1.** Empfänger für CDMA-Übertragung, wobei eine Vielzahl von $K$ Benutzern auf diese Übertragung Zugriff hat, von denen jeder eine Mitteilung überträgt, gebildet durch eine Vielzahl von $N$ Binärdaten, wobei die Daten bzw. das Signal jedes Benutzers nach Spektrumsspreizung durch eine für diesen Benutzer charakteristische binäre Pseudozufallssequenz übertragen wird und dieser Empfänger dabei *s* Stufen in Serie umfasst:

- eine erste Stufe für den Empfang eines globalen Signals, der Gesamtheit der durch die *K* Benutzer übertragenen Signale entsprechend, wobei diese erste Stufe *K* parallele Kanäle umfasst, jeder Kanal einer besonderen Pseudozufallssequenz zugeteilt ist und fähig ist, eine erste Schätzung der empfangenen, dem Benutzer entsprechenden Daten zu liefern, der diese Pseudozufallssequenz verwendet hat, und diese erste Stufe folglich *K* Signale auf *K* Ausgängen liefert,
- *(s-1)* Stufen zur Unterdrückung von Vielfachzugriffsinterferenzen, wobei jede dieser Stufen *K* Eingänge und *K* Ausgänge besitzt, die *K* Eingänge der ersten Interferenzunterdrückungsstufe mit den *K* Ausgängen der ersten Empfangsstufe verbunden sind, und die *K* Eingänge der anderen Interferenzunterdrückungsstufen mit den *K* Ausgängen der vorangehenden Interferenzunterdrückungsstufe verbunden sind,
- Gewichtungseinrichtungen jeder durch jeden der *K* Ausgänge von jeder der *s* Stufen gelieferten Gruppe von *K* Signalen, wobei die Ausgangssignale einer Stufe des Rangs *i* (wobei *i* zwischen 0 und *s-1* enthalten ist) durch einen Koeffizienten $\beta_i$ gewichtet werden und die Koeffizienten $\beta_i$ gewählt werden, damit eine bestimmte Größe klein ist,
- einen Addierer mit *s* Gruppen von *K* Eingängen, um die *s* Gruppen von *K* gewichteten Signalen zu empfangen,
- eine Entscheidungseinrichtung, die mit dem Addierer verbunden ist, für jeden Benutzer eine gewichtete Summe von Signalen empfängt und das entsprechende, schließlich übertragene Signal liefert,

wobei dieser Empfänger **dadurch gekennzeichnet ist, dass** er Einrichtungen umfasst, um die Gewichtungskoeffizienten $\beta_i$ folgendermaßen auszuwählen:

- Gegeben eine Matrix *A* mit *NK* Zeilen und *NK* Spalten, bei der die Elemente der Hauptdiagonalen null sind und die Elemente außerhalb der Diagonalen die Interkorrelationen zwischen den Signalen widerspiegeln, die durch die *K* Benutzer für die *N* verschiedenen Binärdaten der übertragenen Mitteilungen übertragen werden,

wobei diese Matrix *A NK* Eigenwerte $\lambda_j$ besitzt, verteilt entsprechend einer bestimmten Verteilung *p(λ)*,

- die polynominale Entwicklung $\alpha_0\lambda_j^0 + \alpha_1\lambda_j^1 + ... + \alpha_i\lambda_j^i + ... + \alpha_{s-1}\lambda_j^{s-1}$, wo die $\alpha_i$ Koeffizienten sind, präsentieren mit der Größe *1/(1+λj)* für jeden Eigenwert $\lambda_j$ einen mit *e(λj)* bezeichneten Abstand, wobei die Größe, die man minimal macht, für alle Eigenwerte $\lambda_j$ die Summe des Quadrats dieses Abstands ist, gewichtet durch die Verteilung der Eigenwerte, also

$$\sum_{j=0}^{NK-1} p(\lambda)[e(\lambda_j)]^2 \, , \, \mathbb{I}$$

mit außerdem der Bedingung

$$\sum_{j=0}^{NK-1} p(\lambda_j)e(\lambda_j) = 0 \, ,$$

wobei diese doppelte Grenzwertbedingung die Koeffizienten $\alpha_i$ definiert,
- die jede Stufe des Empfängers betreffenden Gewichtungskoeffizienten $\beta_i$ leiten sich von den Koeffizienten $\alpha_i$ durch folgende Relationen ab: $\beta_i = (-1)^i(\alpha_i + \alpha_{i+1})$ für *i*-Werte von 0 bis *s-2* und $\beta_i = (-1)^i\alpha_i$ für *i=s-1*.

2. Empfänger nach Anspruch 1, bei dem man zur Verteilung *p(λ)* der Eigenwerte der Matrix *A* einen angenäherten Ausdruck gleich *γ²(λ+1-α)exp[-γ(λ+1-α)]* nimmt, wo *γ und α* entsprechende Konstanten sind.

3. Empfänger nach Anspruch 2 für Synchronkommunikationen, zwei Stufen (*s=2*) umfassend, nämlich eine erste Stufe für den Empfang und eine Interferenzunterdrückungsstufe, bei dem:

- der Gewichtungskoeffizient $\beta_0$ zwischen ungefähr 0,14 und ungefähr 0,30 enthalten ist,
- der zweite Gewichtungskoeffizient $\beta_1$ zwischen ungefähr 0,85 und ungefähr 0,75 enthalten ist.

**4.** Empfänger nach Anspruch 1 für Synchronkommunikationen, drei Stufen (*s=3*) umfassend, nämlich eine Empfangsstufe gefolgt von zwei Interferenzunterdrückungsstufen, bei dem:

- der erste Gewichtungskoeffizient $\beta_0$ zwischen ungefähr 0,01 und ungefähr 0,02 enthalten ist,
- der zweite Gewichtungskoeffizient $\beta_1$ zwischen ungefähr 0,32 und ungefähr 0,56 enthalten ist,
- der dritte Gewichtungskoeffizient $\beta_2$ zwischen ungefähr 0,66 und ungefähr 0,45 enthalten ist.

**5.** Empfänger nach Anspruch 1 für Synchronkommunikationen, vier Stufen (*s=4*) umfassend, nämlich eine Empfangsstufe gefolgt von drei Interferenzunterdrückungsstufen, bei dem:

- der erste Gewichtungskoeffizient $\beta_0$ im Wesentlichen null ist,
- der zweite Gewichtungskoeffizient $\beta_1$ zwischen ungefähr 0,14 und ungefähr 0,26 enthalten ist,
- der dritte Gewichtungskoeffizient $\beta_2$ zwischen ungefähr 0,49 und ungefähr 0,58 enthalten ist,
- der vierte Gewichtungskoeffizient $\beta_3$ zwischen ungefähr 0,37 und ungefähr 0,22 enthalten ist.

**6.** Empfänger nach Anspruch 1 für Synchronkommunikationen, fünf Stufen (*s=5*) umfassend, nämlich eine Empfangsstufe gefolgt von vier Interferenzunterdrückungsstufen, bei dem:

- der Gewichtungskoeffizient $\beta_0$ im Wesentlichen null ist,
- der Gewichtungskoeffizient $\beta_1$ für zwei Benutzer ungefähr 0,36 ist, oder für mehr als zwei Benutzer zwischen ungefähr 0,02 und ungefähr 0,06 enthalten ist,
- der Gewichtungskoeffizient $\beta_2$ für zwei Benutzer ungefähr 1,34 ist, oder für mehr als zwei Benutzer zwischen ungefähr 0,27 und ungefähr 0,46 enthalten ist,
- der Gewichtungskoeffizient $\beta_3$ für zwei Benutzer ungefähr 0,37 ist, oder für mehr als zwei Benutzer zwischen ungefähr 0,48 und ungefähr 0,42 enthalten ist,
- der Gewichtungskoeffizient $\beta_4$ für zwei Benutzer ungefähr -1,08 ist, oder für mehr als zwei Benutzer zwischen ungefähr 0,22 und ungefähr 0,10 enthalten ist.

**7.** Empfänger nach Anspruch 1 für Synchronkommunikationen, sechs Stufen (*s=6*) umfassend, nämlich eine Empfangsstufe gefolgt von fünf Interferenzunterdrückungsstufen, bei dem:

- der Gewichtungskoeffizient $\beta_0$ im Wesentlichen null ist,
- der Gewichtungskoeffizient $\beta_1$ für zwei Benutzer ungefähr 1,24 ist, oder für mehr als zwei Benutzer im Wesentlichen null ist,
- der Gewichtungskoeffizient $\beta_2$ für zwei Benutzer ungefähr 9,83 ist, oder für mehr als zwei Benutzer zwischen ungefähr 0,16 und ungefähr 0,28 enthalten ist,
- der Gewichtungskoeffizient $\beta_3$ für zwei Benutzer ungefähr 11,78 ist und für mehr als zwei Benutzer zwischen ungefähr 0,40 und 0,48 enthalten ist,
- der Gewichtungskoeffizient $\beta_4$ für zwei Benutzer ungefähr -8,89 ist, oder für mehr als zwei Benutzer zwischen ungefähr 0,3 und 0,24 enthalten ist,
- der Gewichtungskoeffizient $\beta_5$ für zwei Benutzer ungefähr -12,57 ist, oder für mehr als zwei Benutzer zwischen ungefähr 0,09 und 0,04 enthalten ist.

**Claims**

**1.** A receiver for Code Division Multiple Access (CDMA) transmission, this transmission being accessible to a plurality of $K$ users each transmitting a message made up of a plurality of $N$ binary data, each piece of data pertinent to a user being transmitted after spectrum spreading by a pseudo-random binary sequence belonging to that user, this receiver comprising $s$ stages in series, of which :

- a first stage of reception of a global signal corresponding to all the signals transmitted by the $K$ users, this first stage comprising $K$ channels in parallel, each channel being allocated a particular pseudo-random sequence and being capable of supplying a first estimate of the data received corresponding to the user having used that pseudo-random sequence, this first stage thereby supplying $K$ signals on $K$ outputs,
- *(s-1)* stages of multiple access interference suppression, each of these stages having $K$ inputs and $K$ outputs, the $K$ inputs of the first interference suppression stage being connected to the $K$ outputs of the first reception stage, and the $K$ inputs of the other interference suppression stages being connected to the $K$ outputs from the interference suppression stage that precedes it,

- means of weighting each group of $K$ signals supplied through the $K$ outputs from each of the $s$ stages, the output signals from a stage of rank i (i being between 0 and s-1) being weighted by a coefficient $\beta_i$ the coefficients $\beta_i$ being chosen so that a certain quantity is a minimum,
- an adder with s groups of K inputs to receive the s groups of K weighted signals,
- a decision making means, connected to the adder and receiving, for each user, a weighted sum of signals and supplying the corresponding data finally transmitted,

this receiver being **characterized in that** it comprises means for choosing the weighting coefficients $\beta_i$ in the following way:

- A being a matrix of NK lines and NK columns in which the elements of the main diagonal are zeros and the elements outside the diagonal reflect the intercorrelations between the signals transmitted by the K users for the N different binary data of the transmitted messages, this matrix A having NK pertinent values $\lambda_j$ distributed in accordance with a certain distribution p($\lambda$),
- the polynomial expansion $\alpha_0\lambda^0_j + \alpha_1\lambda^1_j + .. + \alpha_i\lambda^i_j + .. + \alpha_{s-1}\lambda_j{}^{s-1}$, where the $\alpha_i$ are coefficients, having with the quantity $1/(1+\lambda_j)$, a deviation designated e($\lambda_j$) for each pertinent value $\lambda_j$, the quantity that is made a minimum is the sum, for all pertinent values $\lambda_j$ of the square of this deviation, weighted by the distribution of the pertinent values, i.e.

$$\sum_{j=0}^{NK-1} p(\lambda)\,[e(\lambda_j)]^2,$$

with in addition the condition

$$\sum_{j=0}^{NK-1} p(\lambda_j)\,e(\lambda_j) \;=\; 0,$$

this double constraint defining the coefficients $\alpha_i$,
- the weighting coefficients $\beta_I$ modifying each stage of the receiver are derived from coefficients $\alpha_I$ by the equations $\beta_i = (-1)^i(\alpha_i+\alpha_{i+1})$ for values of $i$ going from 0 to $s$-2 and $\beta_i=(-1)^i\alpha_i$ for $i$=s-1.

2. A receiver according to Claim 1, in which one takes for distribution $p(\lambda)$ of the pertinent values of the matrix $A$, an approximate expression equal to $\gamma^2(\lambda+1-a)exp[-\gamma(\lambda+1-a)]$ where $\gamma$ and $a$ are suitable constants.

3. A receiver according to Claim 2 for synchronous communications, comprising two stages *(s=2)*, a first reception stage and an interference suppression stage, in which :

- the weighting coefficient $\beta_0$ is between about 0.14 and about 0.30,
- the second weighting coefficient $\beta_1$ is between about 0.85 and about 0.75.

4. A receiver according to Claim 1 for synchronous communications, comprising three steps *(s=3)*, a first reception stage followed by two interference suppression stages, in which :

- the first weighting coefficient $\beta_0$ is between about 0.01 and about 0.02,
- the second weighting coefficient $\beta_1$ is between about 0.32 and about 0.56,
- the third weighting coefficient $\beta_2$ is between about 0.66 and about 0.45.

5. A receiver according to Claim 1 for synchronous communications, comprising four stages *(s=4)*, a reception stage followed by three interference suppression stages, in which :

- the first weighting coefficient $\beta_0$ is approximately zero,
- the second weighting coefficient $\beta_1$ is between about 0.14 and about 0.26,
- the third weighting coefficient $\beta_2$ is between about 0.49 and about 0.58,
- the fourth weighting coefficient $\beta_3$ is between about 0.37 and about 0.22.

6. A receiver according to Claim 1 for synchronous communications, comprising five stages (*s=5*), a reception stage followed by four interference suppression stages, in which :

- the weighting coefficient $\beta_0$ is approximately zero,
- the weighting coefficient $\beta_1$ is close to 0.36 for two users or between about 0.02 and about 0.06 for more than two users,
- the weighting coefficient $\beta_2$ is close to 1.34 for two users or between about 0.27 and about 0.46 for more than two users,
- the weighting coefficient $\beta_3$ is close to 0.37 for two users or between about 0.48 and about 0.42 for more than two users,
- the weighting coefficient $\beta_4$ is close to -1.08 for two users or between about 0.22 and about 0.10 for more than two users.

7. A receiver according to Claim 1 for synchronous communications, comprising six stages *(s=6)*, a reception stage followed by five interference suppression stages, in which :

- the weighting coefficient $\beta_0$ is approximately zero,
- the weighting coefficient $\beta_1$ is close to 1.24 for two users or approximately zero for more than two users,
- the weighting coefficient $\beta_2$ is close to 9.83 for two users or between about 0.16 and about 0.28 for more than two users,
- the weighting coefficient $\beta_3$ is close to 11.78 for two users or between about 0.40 and 0.48 for more than two users,
- the weighting coefficient $\beta_4$ is close to -8.89 for two users or between about 0.3 and 0.24 for more than two users,
- the weighting coefficient $\beta_5$ is close to -12.57 for two users or between 0.09 and 0.04 for more than two users.

FIG. 1

EP 0 945 996 B1

FIG. 2

EP 0 945 996 B1

FIG. 3

FIG. 4

FIG. 5

FIG. 6

FIG. 7

FIG. 8

300

301

$$\sigma^2{}_\lambda = 0,06$$

302

$$\gamma = 6,66$$
$$a = 0,75$$

303

$$p(\lambda) = 44,35 \cdot (\lambda + 0,25) \cdot exp(-6,66\lambda - 4,99)$$

304

$$\alpha_0 = 1$$
$$\alpha_1 = -0,98$$
$$\alpha_2 = 0,52$$

305

$$\beta_0 = 0,02$$
$$\beta_1 = 0,46$$
$$\beta_2 = 0,52$$

FIG. 9